Europäisches Patentamt

European Patent Office

Office européen des brevets

(11) Publication number: **0 233 011 B1**

(19)

(12) **EUROPEAN PATENT SPECIFICATION**

(45) Date of publication of patent specification: **09.09.92**  (51) Int. Cl.⁵: **G02F 1/015**, G02F 1/31

(21) Application number: **87300718.1**

(22) Date of filing: **28.01.87**

(54) **Optical switch.**

(30) Priority: **29.01.86 JP 15632/86**

(43) Date of publication of application:
**19.08.87 Bulletin 87/34**

(45) Publication of the grant of the patent:
**09.09.92 Bulletin 92/37**

(84) Designated Contracting States:
**DE FR GB**

(56) References cited:
**EP-A- 0 147 195**
**EP-A- 0 147 808**
**GB-A- 2 053 555**
**US-A- 4 521 069**

(73) Proprietor: **HITACHI, LTD.**
**6, Kanda Surugadai 4-chome**
**Chiyoda-ku, Tokyo 100(JP)**

(72) Inventor: **Tada, Kunio**
**2-13-9, Minamiurawa**
**Urawa-shi Saitama-ken(JP)**
Inventor: **Inoue, Hiroaki**
**2-32 E-102, Koyasu-machi**
**Hachiouji-shi Tokyo(JP)**
Inventor: **Okada, Yoshitaka**
**106-11, Oubiraki Hirono-cho**
**Uji-shi Kyoto-fu(JP)**
Inventor: **Matsumura, Hiroyoshi**
**264-61, Kubo Hidaka-machi**
**Iruma-gun Saitama-ken(JP)**

(74) Representative: **Calderbank, Thomas Roger et al**
**MEWBURN ELLIS & CO. 2/3 Cursitor Street**
**London EC4A 1BO(GB)**

## Description

The present invention relates to an optical switch using carrier injection so as to utilize the change in refractive index and/or absorption coefficient caused thereby. Although the word "optical" is used, and reference is made to switching "light", the present invention is applicable generally to switching electromagnetic radiation, and not merely radiation in the visible wavelengths.

One known type of optical switch using the carrier injection is the total internal reflection type (TIR) optical switch. This type of optical switch uses a change in the refractive index to alter its output port. This type of optical switch has been described in the Collected Papers S7-4 for the 1985 National Meeting of Semiconductor Material Department of Institute of Electronic Communication Engineer of Japan, INOUE et al., and in European Patent Application No. EP-A-147195 (MATSUMURA et al). Another known type of optical switch is the loss modulation type optical switch. This type of optical switch uses a change in absorption coefficient to enable it to act as an intensity modulator and/or an ON/OFF switch. A description of this type of optical switch is found in the Collected Papers 926 for the 1985 Combined National Meeting of Institute of Electronic Communication Engineers of Japan, YAMAGUCHI et al. These optical switches utilize a large refractive index change and/or absorption coefficient change caused by the injection of carriers, and have the advantages of small size and high extinction ratio. In these optical switches, however, the carriers injected into a switching region, to cause alteration of output port and/or intensity modulation and/or ON/OFF switching have an extinction speed determined by the recombination lifetime when the optical switches are to be turned OFF, i.e. when the injection of the carriers is stopped. Consequently, the response speed of the switches is limited to the order of several nanoseconds to several tens of nanoseconds.

Thus the known optical switches have the problem that no consideration has been given to increasing the response speed (switching speed) of the optical switch, and hence it is difficult to make the switching speed less than several nanoseconds.

The present invention seeks to improve significantly the switching speed of a carrier injection type optical switch, and thus permit the production of an element small in size and with a high extinction ratio, and therefore suitable for use in an optical integrated circuit.

According to the present invention, there is provided an optical switch comprising:

an optical junction region including a semiconductor substrate region a semiconductor cladding region having the same conductivity type as that of the substrate region, and a semiconductor waveguide region having a conductivity type opposite to that of the substrate region and being between the semiconductor substrate region and the semiconductor cladding region;

an input waveguide and an output waveguide optically connected to each other via the optical junction region; and

a first and a second electrode for applying to the semiconductor waveguide region an electric field causing the injection of carriers into the semiconductor waveguide region so as to change the intensity or the direction of propagation of light passing through the optical junction region; wherein

the optical switch has a third electrode for applying to the waveguide region an electric field causing the extraction of the injected carriers from the semiconductor waveguide region so that the extraction of the injected carriers brings a rapid change in a refractive index or absorption coefficient in the semiconductor waveguide region.

Embodiments of the invention will now be described in detail, by way of example, with reference to the accompanying drawings, in which:

Figs. 1A and 1B show a total reflection type optical switch being a first embodiment of the present invention, Fig. 1A being a plan view and Fig. 1B being a cross-sectional view along the line B-B' in Fig. 1A;

Figs. 2A and 2B show a second embodiment of the present invention, Fig. 2A being a plan view and Fig. 2B being a cross-sectional view along the line B-B' in Fig. 2A;

Fig. 3 shows a cross-sectional view of a third embodiment of the present invention;

Fig. 4 is a diagram of a circuit for evaluation of the characteristics of an optical switch according to the present invention;

Fig. 5 shows a cross-sectional view of a fourth embodiment of the present invention;

Figs. 6A and 6B show a fifth embodiment of the present invention, Fig. 6A being a plan view and Fig. 6B being a cross-sectional view along the line B-B' in Fig. 6A; and

Figs. 7A and 7B show a sixth embodiment of the present invention, Fig. 7A being a plan view and Fig. 7B being a cross-sectional view along the line B-B' in Fig. 7A.

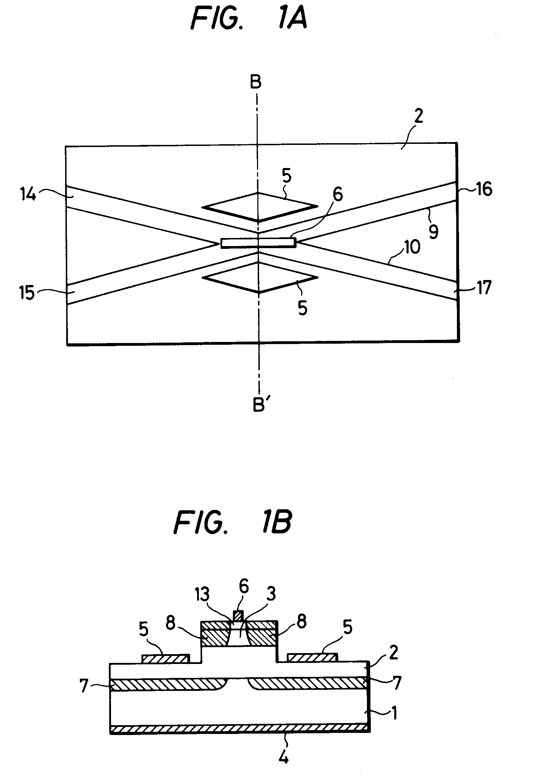

First the principle of operation of an optical switch according to the present invention will be described referring to the total internal reflection type optical switch illustrated in Figs. 1A and B. As illustrated in Figs. 1A and 1B, electrodes 4,5 and 6 are provided in close contact with or in the vicinity of semiconductor regions 1,2 and 3 respectively (being a substrate region 1, a wave-guide region 2, and a cladding region 3). A circuit (not shown) applies a potential difference between the electrodes 4 and 5 and/or between the electrodes 5 and 6 in the period after injection of carriers ceases. In this way, carriers can be extracted at a very high speed from the semiconductor region 2 through which light waves are guided. In other words, the carriers can be extracted in accordance with a transit time $\tau_t$ determined by the diffusion of the carriers. The transit time $\tau_t$ is given by the following equation, in which the distance of transfer of the carriers through the semiconductor region 2 is denoted by W and a diffusion coefficient by D:

$$\tau_t = \frac{W^2}{2D}$$

It is known that the diffusion coefficient is about 80 to 130 $cm^2/sec$ when the carriers are electrons and the semiconductor region 2 is of e.g. GaAs, GaAℓAs, InP, InGaAs or InGaAsP. When W = 1 $\mu$m, then $\tau_t$ = 39 to 63 ps, which means that the carriers can be extracted at a very high speed. This rapid change in the number of carriers in the region 2 causes a correspondingly rapid change in the refractive index and/or the absorption coefficient in the switching region. Therefore, the light reflectivity of the total internal reflection type optical switch shown in Figs. 1A and 1B changes sharply, and thus a high-speed switching operation can be obtained. The time $\tau$ required for this switching operation is expressed generally by a value about 2.3 times larger than the value of $\tau_t$, and thus high-speed operation of about 90 to 145 ps may be achieved. As stated above, the change in the amount of carriers in the region 2 results in the change in the refractive index and/or the absorption coefficient. It is clear, therefore, that the principle of the present invention may be applied to any optical switch which is operated by the injection of carriers, such as a directional coupler type switch, an interferometer type switch such as the Mach-Zehnder interferometer, a cavity type switch, a loss modulation type switch, a cut-off type switch, and a variety of others, in addition to the total internal reflection type optical switch of Figs. 1A and 1B.

Examples of the present invention will now be described.

Example 1

The first example is of the embodiment of the invention shown in Figs. 1A and 1B. First, Zn diffusion regions 7 were formed in parts of the surface layer of an n-type InP substrate 1 having a carrier density of 2 x $10^{18}$ $cm^{-3}$. Then a p-InGaAsP layer (optical waveguide layer) 2, an n-InP layer (cladding layer) 3 and an n-InGaAsP layer (cap layer) 13 were formed sequentially by using liquid-phase epitaxy.

Next, Zn was diffused into parts of the InP layer 3 and the cap layer 13 to form current blocking regions 8.

Then, parts of the layers 13, 3 and 2 were removed by using a phosphoric acid etchant, to form projecting ridge waveguide 9 and 10, as illustrated in Figs. 1A and B.

Finally, rhombic electrodes 5 of Au-Zn and electrodes 4 and 6 of Au-Ge-Ni respectively were formed by using evaporation, and thereby a 2 x 2 terminal optical switch was produced.

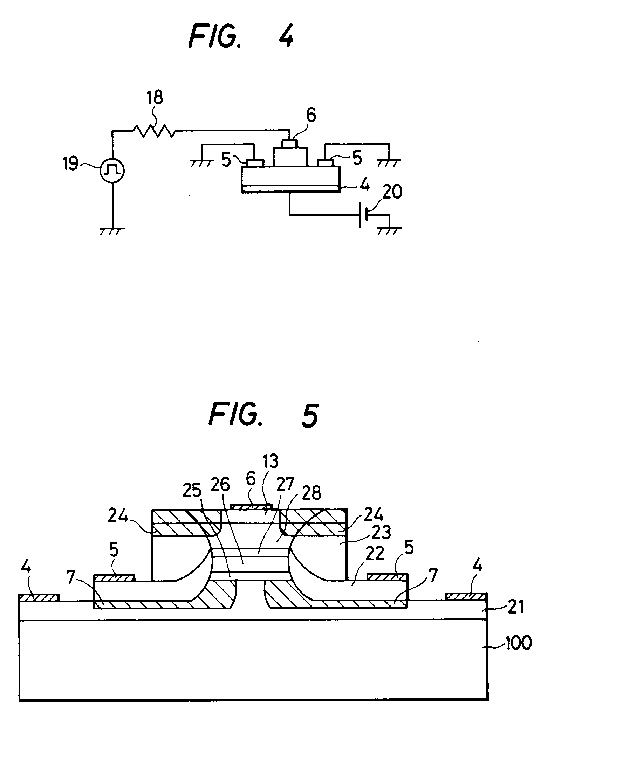

The optical switching characteristic of the optical switch thus formed was examined by applying a beam of light of wavelength 1.55 $\mu$m to the light incident end 14 of the optical switch and by measuring the intensity of the light emitted from the light emitting ends 16 and 17 thereof. With electric connection arranged as shown in Fig. 4, an electric signal of a pulse width 2 ns, a pulse rise time of 0.1 ns and a pulse amplitude 5 Vp-p was applied by using an oscillator 19. The effect was that beams of light emitted from the light emitting ends 16 and 17 of the switch were opposite in polarity to each other and had the same waveform as that of the electric signal. The delay in response was 0.5 ns or less in terms of the delay in rise time and fall time.

Example 2

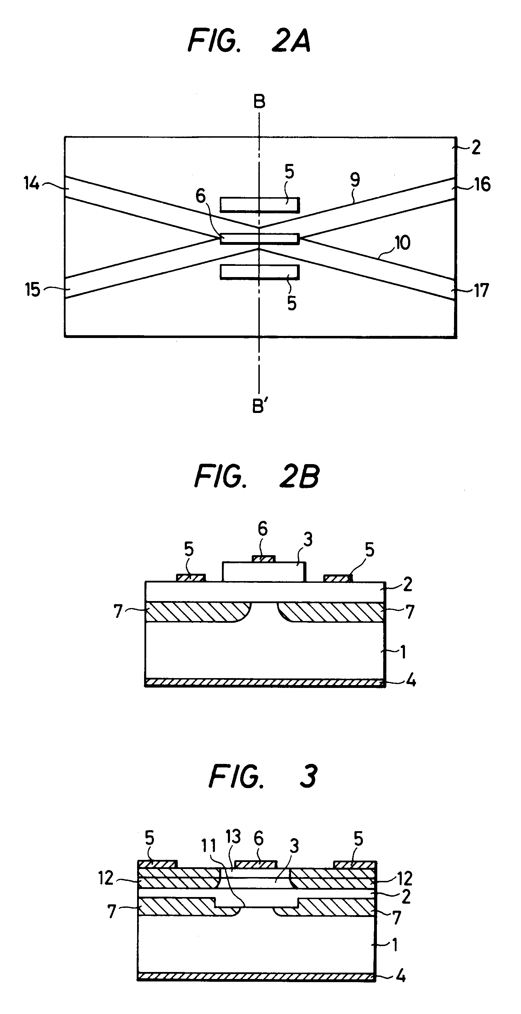

The optical switch of this second example has a structure shown in Figs. 2A and B, which is generally similar to that of the embodiment of Figs. 1A and 1B, was manufactured according to a similar method. The differences between the embodiment of Figs. 1A and 1B, and the embodiment of Figs. 2A and 2B is that a strip-like cladding region 3 was formed directly on the waveguide region 2, so that it was not necessary to etch the layers to form the waveguides. The current blocking regions 8 were omitted, and the electrodes 5 on the waveguide region 2 were strip-like, rather than rhomboidal. The same results as in the first example were obtained.

Example 3

A 1 x 2 terminal optical switch having a Y-branch structure but otherwise similar to that of the second embodiment was manufactured according to a method similar to that described above. The same results were obtained.

## Example 4

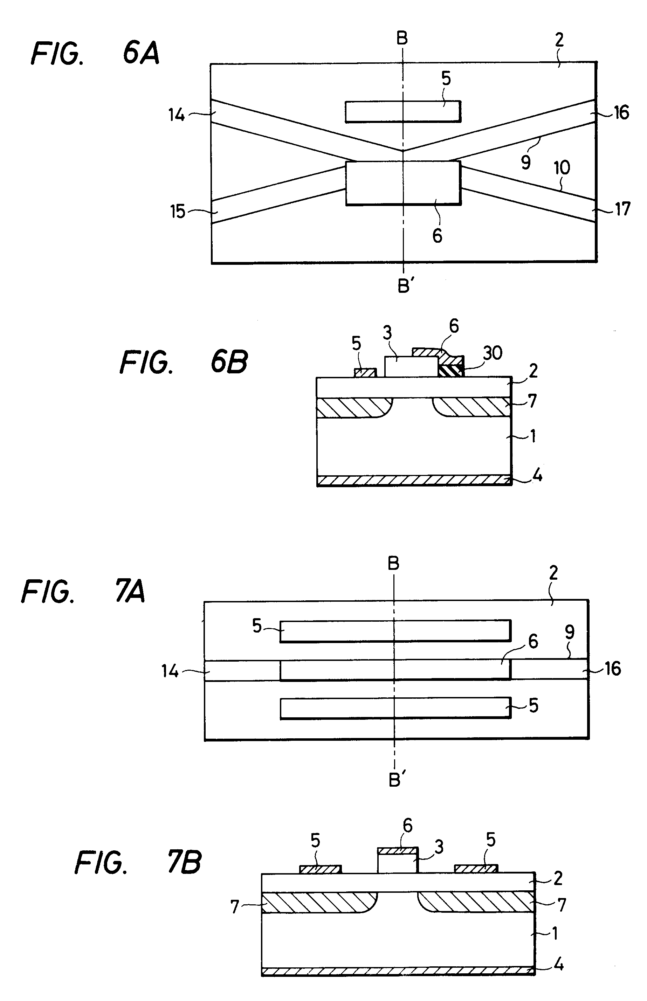

The same results were obtained by modifying the second embodiment so that it had an electrode structure as shown in the embodiment of Figs. 6A and 6B. In this embodiment, an insulating layer 30 was provided on the waveguide region 2 adjacent the cladding region 3 so that an electrode 6 was in contact only with the cladding region 3 being invisible behind it and not shown in the figure and not in contact with the waveguide region 2.

## Example 5

This example will be described with reference to Fig. 3. First a channel 11 was formed on the surface of an n-type InP substrate 1 having a carrier density of $2 \times 10^{18}$ cm$^{-3}$ by a conventional etching method. This formed optical waveguides corresponding to the optical waveguides 9 and 10 in the first embodiment. Next, Zn was diffused into part of the surface of the substrate 1 to form current confining layers 7.

Subsequently, a p-InGaAsP layer 2 in which a wave-length corresponding to the band gap energy was 1.5 $\mu$m, an n-InP layer 3, and a cap layer 13 of InGaAsP, were formed sequentially by liquid-phase epitaxy. Then, Zn was diffused into parts of the n-InP layer 3 and the cap layer 13 to form a current channel 12 (a current confining layer in relation to injected current). Lastly Cr-Au was evaporated to provide electrodes 5 and 6, and Au-Ge-Ni was evaporated to provide an electrode 4, the optical switch thus being completed.

The optical switch thus formed showed the same operation characteristics as in the first embodiment.

The optical waveguide of this example is called a channel stripe waveguide.

With embodiment of Fig. 3, the same results were obtained either by using the Y-branch structure of the third example or by using the electrode structure shown in Figs. 6A and 6B.

## Example 6

This example will be described by using Fig. 5, which shows an optical switch in which an optical waveguide having a Buried Hetero-junction (BH) structure is formed on an insulating substrate.

An n$^+$-InP layer 21 was grown on an insulating InP substrate 100 by liquid-phase epitaxy. Then Zn was diffused into parts of this layer, and thereby a current confining layer 7 was formed.

Next, a p-InGaAsP layer (buffer layer) 25, a p-InGaAsP waveguide layer 26, an n-InGaAsP layer (buffer layer) 27, an n-InP layer (cladding layer) 28 and an n-InGaAsP layer (cap layer) 13 were grown sequentially in a crystallizing manner by liquid-phase epitaxy. Subsequently mesa etching was used to form the layers 7, 25, 26, 27 and 28 with a mesa structure respectively by using a Br-methanol etchant. A p-InGaAsP layer 22 and an n-InP layer 23 were then grown so that they buried said mesa structures. Subsequently, Zn was diffused to form a current confining layer 24, selective etching was applied to expose parts in which electrodes were to be formed, electrodes 4, 5 and 6 were formed therein by evaporation, and thus the optical switch was completed.

This embodiment operates in a similar way to the first embodiment, but is easier to apply to integration, because all the electrodes of the optical switch of this embodiment are formed on one surface only of the substrate.

In this embodiment, the same results were obtained either by using a Y-branch structure as in the third example, or by using the electrode structure shown in Figs. 6A and B.

Because injected carriers are used to change the refractive index to operate the optical switch, in the six examples described above, the present invention is applicable to any optical switch construction, such as a directional coupler type, an interferometer type, or a cavity type in which change in refractive index may be used, in addition to the total internal reflection type of switch.

## Example 7

This example will be described with reference to Figs. 7A and 7B. Manufacture of this switch was made by the same method as in the case of the first example. The optical switch of this example is different from that of the first example, in that it has only one waveguide 9 and that the width of the electrode 6, i.e. its dimension in the B-B' direction, is about the same as the width of the waveguide 9.

When light was applied to the light incidence end 14 of this optical switch and the intensity of the light emitted from the light emitting end 16 thereof was measured in the same way as in the first example, the optical signal was modulated in accordance with the waveform of the signal applied to the electrode 6, while the response speed characteristic thereof was the same with those in the first, second, and sixth examples.

In this seventh example, in which a strip loaded waveguide was employed, the same result was obtained also when a waveguide of a ridge type, a channel strip type or a BH type having the same waveguide structure as in the first, second, fifth and sixth examples was employed.

In the seven examples described above, the same results were obtained when the conductivity type of each semiconductor region was reversed.

Moreover, the same result was obtained when semiconductors of GaAs-GaAℓAs or Si were employed, and furthermore, the present invention could be adapted also when the junctions between semiconductor regions were homogeneous.

In the examples described above, current confining layers 7, 8, 12 and 24 were provided but satisfactory results could also be obtained with a construction in which part or the whole of such layers was removed. Although the efficiency of switching is reduced slightly due to occasional diffusion of a current, there is the advantage that manufacture is facilitated.

The present invention permits the production of an optical switch which is small in size and has a high extinction ratio and a remarkably high response speed, thus facilitating the construction of a large capacity optical transmission-communication system or an optical exchange system.

**Claims**

1. An optical switch comprising:

   an optical junction region including a semiconductor substrate region (1;21), a semiconductor cladding region (3;28) having the same conductivity type as that of the substrate region, and a semiconductor waveguide region (2;26) having a conductivity type opposite to that of the substrate region and being between the semiconductor substrate region and the semiconductor cladding region;

   an input waveguide (14,15) and an output (16,17) waveguide optically connected to each other via the optical junction region; and

   a first and a second electrode (4,6) for applying to the semiconductor waveguide region an electric field causing the injection of carriers into the semiconductor waveguide region so as to change the intensity or the direction of propagation of light passing through the optical junction region;

   characterised in that:

   the optical switch has a third electrode (5) for applying in combination with the first and second electrodes to the waveguide region an electric field causing the extraction of the injected carriers from the semiconductor waveguide region so that the extraction of the injected carriers brings a rapid change in a refractive index or absorption coefficient in the semiconductor waveguide region.

2. An optical switch according to claim 1, wherein the injection of carriers into the waveguide region (2,26) causes a change in the direction of light output of the switch or the modulation of light intensity, from a first state to a second state and the extraction of the injected carriers from the waveguide region (2,26) causes a change in the direction of light output of the switch or the modulation of light intensity from the second state to the first state.

3. An optical switch according to claim 1 or claim 2, wherein the substrate region (1,21), the waveguide region (2,26), and the cladding region (3,28) are of compound semiconductors.

4. An optical switch according to any one of claims 1 to 3, wherein there is at least one current confining region (7) in at least one of the substrate region (1,21), the waveguide region (2,26) and the cladding region (3,28).

5. An optical switch according to any one of the preceding claims having at least two output waveguides (9,10) defined by the waveguide region (2,26) and/or the cladding region (3,28), the second electrode (6) being on the cladding region (3,26) extending over the junction region, and the third electrode (5) being on the waveguide region (2,26) adjacent the junction region but not overlapping.

6. An optical switch according to any of the preceding claims, wherein the injection of carriers in to the waveguide region causes a change of absorption coefficient from a first value to a second value for modulating the intensity of light in the waveguide region, and the extraction of the injected carriers from the waveguide region causes the change of absorption coefficient from the second value to the first value.

7. An optical switch according to any one of the preceding claims wherein each of the first and second electrodes (4,6) is on the substrate region and the cladding region respectively, and the third electrode (5) is on the waveguide region.

8. An optical switch according to any one of the previous claims wherein the optical switch is a total internal reflection type optical switch.

9. An optical switch according to any one of the previous claims wherein the optical switch uses a strip loaded waveguide.

10. An optical switch according to any one of the previous claims wherein the optical switch includes a Y-branch structure.

11. An optical switch according to any one of the previous claims wherein the optical switch includes a channel stripe waveguide.

**12.** An optical switch according to any one of the previous claims wherein the optical switch includes a buried heterojunction.

**13.** An optical switch according to any one of the previous claims wherein the optical switch includes a single waveguide.

**Patentansprüche**

**1.** Optischer Schalter, mit

einem optischen Übergangsgebiet mit einem Halbleiter-Substratbereich (1; 21), einem Halbleiter-Überzugsbereich (3; 28), der denselben Leitungstyp aufweist wie der Substratbereich, und einem Halbleiter-Wellenleiterbereich (2; 26), der einen Leitfähigkeitstyp aufweist, der dem des Substratbereiches entgegengesetzt ist, und der zwischen dem Halbleiter-Substratbereich und dem Halbleiter-Überzugsbereich liegt; mit

einem Eingangs-Wellenleiter (14, 15) und einem Ausgangs-Wellenleiter (16, 17), die über das optische Übergangsgebiet miteinander verbunden sind; und mit

einer ersten und einer zweiten Elektrode (4, 6) zum Anlegen eines elektrischen Feldes an den Halbleiter-Wellenleiterbereich, das die Injektion von Ladungsträgern in den Halbleiter-Wellenleiterbereich bewirkt, um die Intensität oder die Richtung der Fortpflanzung des Lichts zu verändern, das durch das optische Übergangsgebiet läuft;

dadurch gekennzeichnet, daß

der optische Schalter eine dritte Elektrode (5) aufweist, um in Verbindung mit der ersten und der zweiten Elektrode ein elektrisches Feld an den Wellenleiterbereich anzulegen, das eine Extraktion der injizierten Ladungsträger aus dem Halbleiter-Wellenleiterbereich bewirkt, so daß die Extraktion der injizierten Ladungsträger eine schnelle Änderung im Brechungsindex oder dem Absorptionskoeffizienten des Halbleiter-Wellenleiterbereiches hervorruft.

**2.** Optischer Schalter nach Anspruch 1, wobei die Injektion der Ladungsträger in den Wellenleiterbereich (2, 26) eine Änderung in der Richtung des von dem Schalter ausgegebenen Lichts oder eine Modulation der Lichtintensität von einem ersten Zustand zu einem zweiten Zustand bewirkt, und wobei die Extraktion der injizierten Ladungsträger aus dem Wellenleiterbereich (2, 26) eine Änderung in der Richtung des von dem Schalter ausgegebenen Lichts oder eine Modulation der Lichtintensität vom zweiten Zustand in den ersten Zustand bewirkt.

**3.** Optischer Schalter nach Anspruch 1 oder Anspruch 2, wobei der Substratbereich (1, 21), der Wellenleiterbereich (2, 26) und der Überzugsbereich (3, 28) von Verbindungshalbleitern gebildet werden.

**4.** Optischer Schalter nach einem der Ansprüche 1 bis 3, wobei wenigstens ein Strombegrenzungsbereich (7) in wenigstens dem Substratbereich (1, 21), dem Wellenleiterbereich (2, 26) oder dem Überzugsbereich (3, 29) vorgesehen ist.

**5.** Optischer Schalter nach einem der vorstehenden Ansprüche, mit wenigstens zwei Ausgangs-Wellenleitern (9, 10), die durch den Wellenleiterbereich (2, 26) und/oder den Überzugsbereich (3, 28) festgelegt werden, wobei die zweite Elektrode (6) auf dem Überzugsbereich (3, 26) liegt und sich über das Übergangsgebiet erstreckt, und wobei die dritte Elektrode (5) auf dem Wellenleiterbereich (2, 26) angrenzend an das Übergangsgebiet liegt, dieses jedoch nicht überlappt.

**6.** Optischer Schalter nach einem der vorstehenden Ansprüche, wobei die Injektion von Ladungsträgern in den Wellenleiterbereich eine Änderung des Absorptionskoeffizienten von einem ersten Wert auf einen zweiten Wert bewirkt, um die Intensität des Lichts im Wellenleiterbereich zu modulieren, und wobei die Extraktion der injizierten Ladungsträger aus dem Wellenleiterbereich eine Änderung des Absorptionskoeffizienten vom zweiten Wert auf den ersten Wert bewirkt.

**7.** Optischer Schalter nach einem der vorstehenden Ansprüche, wobei die erste und die zweite Elektrode (4, 6) auf dem Substratbereich bzw. dem Überzugsbereich liegt und die dritte Elektrode (5) auf dem Wellenleiterbereich.

**8.** Optischer Schalter nach einem der vorstehenden Ansprüche, wobei der optische Schalter ein optischer Schalter vom Typ mit innerer Gesamtreflexion ist.

**9.** Optischer Schalter nach einem der vorstehenden Ansprüche, wobei der optische Schalter einen streifenförmig belasteten Wellenleiter verwendet.

**10.** Optischer Schalter nach einem der vorstehenden Ansprüche, wobei der optische Schalter eine Y-förmige Verzweigung aufweist.

11. Optischer Schalter nach einem der vorstehenden Ansprüche, wobei der optische Schalter einen Kanalstreifen-Wellenleiter aufweist.

12. Optischer Schalter nach einem der vorstehenden Ansprüche, wobei der optische Schalter einen vergrabenen Heteroübergang aufweist.

13. Optischer Schalter nach einem der vorstehenden Ansprüche, wobei der optische Schalter einen einzigen Wellenleiter aufweist.

**Revendications**

1. Commutateur optique comportant :

une zone de jonction optique comprenant une région de substrat semiconductrice (1;21), une région semiconductrice de revêtement (3;28) possédant le même type de conductivité que la région de substrat, et une région semiconductrice formant guide d'ondes (2;26) possédant un type de conductivité opposé à celui de la région de substrat et située entre la région semiconductrice de substrat et la région semiconductrice de revêtement ;

un guide d'ondes d'entrée (14,15) et un guide d'ondes de sortie (16,17) connectés optiquement l'un à l'autre par l'intermédiaire de la zone de jonction optique; et

des première et seconde électrodes (4,6) pour appliquer à la région semiconductrice formant guides d'ondes un champ électrique provoquant l'injection de porteurs dans la région semiconductrice formant guide d'ondes de manière à modifier l'intensité ou la direction de propagation de la lumière traversant la zone de jonction optique;

caractérisé en ce que :

le commutateur optique possède une troisième électrode (5) pour appliquer, en combinaison avec les première et seconde électrodes, à la région formant guide d'ondes un champ électrique provoquant l'extraction des porteurs injectés à partir de la région semiconductrice formant guide d'ondes de sorte que l'extraction des porteurs injectés provoque une modification rapide de l'indice de réfraction ou du coefficient d'absorption dans la région semiconductrice formant guide d'ondes.

2. Commutateur optique selon la revendication 1, dans lequel l'injection de porteurs dans la région formant guide d'ondes (2,26) provoque une modification de la direction de sortie de la lumière du commutateur ou la modulation de l'intensité lumineuse, d'un premier état vers un second état, et l'extraction des porteurs injectés depuis la région formant guide d'ondes (2,26) provoque une modification de la direction de sortie de la lumière du commutateur ou de la modulation de l'intensité lumineuse, du second état au premier état.

3. Commutateur optique selon la revendication 1 ou 2, dans lequel la région de substrat (1,21), la région formant guide d'ondes (2,26)et la région de revêtement (3,28) sont formées de semiconducteurs composites.

4. Commutateur optique selon l'une quelconque des revendications 1 à 3, dans lequel il est prévu au moins une région (7) de confinement du courant dans au moins une région (1,21) du substrat, dans la région formant guide d'ondes (2,26) et dans la région de revêtement (3,28).

5. Commutateur optique selon l'une quelconque des revendications précédentes, comportant au moins deux guides d'ondes de sortie (9,10) définis par la région formant guide d'ondes (2,26) et/ou la région de revêtement (3,28), la seconde électrode (6) étant située sur la région de revêtement (3,26) et s'étendant sur la zone de la jonction, et la troisième électrode (5) étant située sur la région formant guide d'ondes (2,26) au voisinage de la zone de jonction, mais sans chevauchement.

6. Commutateur optique selon l'une quelconque des revendications précédentes, dans lequel l'injection de porteurs dans la région formant guide d'ondes provoque une modification du coefficient d'absorption d'une première valeur à une seconde valeur pour moduler l'intensité de la lumière dans la région formant guide d'ondes, et l'extraction des porteurs injectés à partir de la région formant guide d'ondes provoque la modification du coefficient d'absorption de la seconde valeur à la première valeur.

7. Commutateur optique selon l'une quelconque des revendications précédentes, dans lequel chacune des première et seconde électrodes (4,6) est située respectivement sur la région du substrat et sur la région de revêtement, et la troisième électrode (5) est située sur la région formant guide d'ondes.

8. Commutateur optique selon l'une quelconque des revendications précédentes, dans lequel le commutateur optique est un commutateur optique du type à réflexion interne totale.

**9.** Commutateur optique selon l'une quelconque des revendications précédentes, dans lequel le commutateur optique utilise un guide d'ondes chargé à bande.

**10.** Commutateur optique selon l'une quelconque des revendications précédentes, dans lequel le commutateur optique comprend une structure d'embranchement en Y.

**11.** Commutateur optique selon l'une quelconque des revendications précédentes, dans lequel le commutateur optique comprend un guide d'ondes à bande formant canal.

**12.** Commutateur optique selon l'une quelconque des revendications précédentes, dans lequel le commutateur otique comprend une hétérojonction ensevelie.

**13.** Commutateur optique selon l'une quelconque des revendications précédentes, dans lequel le commutateur optique comprend un seul guide d'ondes.

FIG. 1A

FIG. 1B

FIG. 2A

FIG. 2B

FIG. 3

FIG. 4

FIG. 5

FIG. 6A

FIG. 6B

FIG. 7A

FIG. 7B